# FASCICULE DE BREVET EUROPEEN

(11) **EP 3 674 937 B1**
(45) Date de publication et mention de la délivrance du brevet: **10.11.2021**
(21) Numéro de dépôt: 19219941.2
(22) Date de dépôt: 27.12.2019
(51) Int. Cl.: G06F 21/35, H04L 29/06

(54) **PROCÉDÉ D'OUVERTURE D'UNE SESSION SÉCURISÉE SUR UN TERMINAL INFORMATIQUE**
ERÖFFNUNGSVERFAHREN EINER GESICHERTEN SESSION AUF EINEM IT-ENDGERÄT
METHOD FOR OPENING A SECURE SESSION ON A COMPUTER TERMINAL

(30) Priorité: 27.12.2018 FR 1874243
(43) Date de publication de la demande: 01.07.2020
(73) Titulaire: Evidian, 78340 Les Clayes Sous Bois (FR)
(72) Inventeur: DEDIEU, Gérard, 78180 Montigny le Bretonneux (FR); COSSARD, David, 49460 Montreuil-Juigné (FR); LEBASTARD, Jacques, 28410 Bû (FR)
(74) Mandataire: Lebkiri, Alexandre

(56) Documents cités:
- LEE HAW ET AL: "A User-Friendly Authentication Solution Using NFC Card Emulation on Android", 2014 IEEE 7TH INTERNATIONAL CONFERENCE ON SERVICE-ORIENTED COMPUTING AND APPLICATIONS, IEEE, 17 novembre 2014 (2014-11-17), pages 271-278, XP032699595, DOI: 10.1109/SOCA.2014.16
- BORCHERT BERND ET AL: "Indirect NFC-login", 8TH INTERNATIONAL CONFERENCE FOR INTERNET TECHNOLOGY AND SECURED TRANSACTIONS (ICITST-2013), INFONOMICS SOCIETY, 9 décembre 2013 (2013-12-09), pages 204-209, XP032572352, DOI: 10.1109/ICITST.2013.6750192
- Emma Christie ET AL: "Enhanced MIT ID Security via One-Time Passcode", , 13 mars 2015 (2015-03-13), XP055639274, Extrait de l'Internet: URL:https://pdfs.semanticscholar.org/e3d4/ c7fa058634b1dc6e8a52a8892efb7dd5bf85.pdf

## Description

### DOMAINE TECHNIQUE

L'invention se rapporte à un procédé d'ouverture d'une session sécurisée sur un terminal informatique.

Le domaine de l'invention est celui de l'authentification pour l'ouverture de session sur des terminaux informatiques. Plus spécifiquement, le domaine de l'invention est celui de l'authentification dite renforcée.

On entendra par ouverture de session une ouverture de session proprement dite mais également le déverrouillage d'une session existante.

On entendra par terminal informatique, dans le cadre du présent document, tout dispositif informatique permettant à un utilisateur d'interagir avec des ressources réseaux ou des ressources locales au terminal. Sont en particulier visés les ordinateurs personnels, aussi appelés PC, Mac, ou stations de travail, qu'ils soient fixes ou portables-. La liste n'est pas exhaustive. Sont également visés les tablettes informatiques, les dispositifs hybrides entre tablettes et PC, ainsi que les smartphones (téléphones mobiles incluant un ordinateur de poche).

On entendra par dispositif autonome un dispositif capable d'établir une communication sans fil et ayant une capacité de traitement de données. Un tel dispositif est, par exemple, un smartphone.

### ART ANTERIEUR

Dans le domaine des activités professionnelles, et de plus en plus dans le domaine des activités domestiques, l'accès à une ressource informatique est précédé par une authentification.

Il est nécessaire de s'authentifier pour accéder à un terminal informatique, c'est-à-dire pour ouvrir une session sur un ordinateur, et/ou pour accéder à une messagerie électronique ou plus généralement à une application. Une application est locale ou accessible à travers un navigateur internet. Cette authentification consiste en la saisie d'un identifiant et d'un mot de passe. Cette saisie est, ou n'est pas, sécurisée via l'utilisation d'un protocole de transmission chiffré. On pense par exemple à l'utilisation du protocole HTTPS pour les applications dîtes « en ligne ».

Pour les terminaux informatiques, on connait des solutions d'authentification renforcées basées sur l'utilisation d'un token physique. Un token physique est un dispositif qui affiche, lorsqu'il est sollicité, une séquence de caractères. Un token physique est associé à un compte utilisateur. Lors de l'authentification un utilisateur saisit :
- Son identifiant,
- Son mot de passe,
- Une séquence de caractères produite par le token physique.

L'authentification est donc garantie par la connaissance d'un premier secret et renforcée par la possession d'un dispositif : le token physique.

Cette authentification renforcée est une des plus sûre qui existe à l'heure actuelle. Elle n'est cependant pas sans présenter certains inconvénients.

Ce mode d'authentification impose en effet d'avoir en permanence sur soi un dispositif dédié à la production de la séquence de caractères. Pour réduire son encombrement et garantir sa durabilité, un tel dispositif est en général équipé d'un écran très petit et non éclairé. Ces caractéristiques rendent difficile la lecture de la séquence de caractères. De plus, toujours pour des raisons de sécurité, la séquence de caractères reste affichée un temps limité et n'est valable que pendant un temps lui aussi limité. Il n'est donc pas aisé de se servir d'un tel token physique.

Un autre problème majeur de ces tokens physiques est qu'ils doivent rester synchronisés avec un serveur dédié à la gestion des tokens. Ainsi, si par inadvertance le token est sollicité en dehors d'une tentative d'ouverture de session, le token peut être désynchronisé et rendre toute tentative de connexion ultérieure impossible.

En outre, l'inconvénient le plus immédiat est qu'il faut saisir trois informations pour s'authentifier.

Un autre problème pour permettre une authentification renforcée est qu'il faut que les moyens employés pour réaliser cette authentification ne soient pas compromis. Il ne faut donc pas que des informations suffisantes à l'authentification puissent être collectées ou interceptées.

LEE HAW ET AL dans "A User-Friendly Authentication Solution Using NFC Card Emulation on Android",2014 IEEE 7TH INTERNATIONAL CONFERENCE ON SERVICE-ORIENTED COMPUTING AND APPLICATIONS, IEEE, 17 novembre 2014 (2014-11-17), pages 271-278, divulguent un serveur qui contient un identifiant d'utilisateur et la clé publique associée pour permettre de vérifier une signature transmise par un token physique (un téléphone portable) suite à l'émission, par le serveur, d'une épreuve. Si la vérification de la signature est réussie, le serveur envoi le résultat au terminal informatique qui peut alors ouvrir une session pour l'utilisateur associé à l'identifiant. BORCHERT BERND ET AL dans "Indirect NFC-login",8TH INTERNATIONAL CONFERENCE FOR INTERNET TECHNOLOGY AND SECURED TRANSACTIONS (ICITST-2013), INFONOMICS SOCIETY, 9 décembre 2013 (2013-12-09), pages 204-209 divulguent l'utilisation de codes QR et d'une carte NFC pour répondre à une épreuve émise par un serveur. La carte NFC transmet au serveur via un téléphone portable un identifiant d'utilisateur et la signature de l'épreuve avec une clé privée associée au serveur. Si la signature est valide et l'utilisateur existe le serveur ouvre une session dans le terminal informatique pour l'utilisateur.

### EXPOSE DE L'INVENTION

L'invention vise à remédier à tout ou partie des problèmes de l'état de la technique identifiés ci-dessus, et notamment à proposer des moyens pour permettre une ouverture de session par une authentification renforcée par la détention d'un dispositif tiers tout en supprimant les étapes de saisie des informations d'authentification.

Dans ce dessein, un aspect de l'invention se rapporte à un Procédé d'ouverture d'une session sécurisée sur un terminal informatique, le terminal informatique étant configuré pour les communications en champ proche, via un dispositif autonome configuré pour les communications en champs proche, caractérisé en ce que l'ouverture de session est réalisée par la mise en oeuvre d'au moins les étapes suivantes :
- Détection du dispositif autonome par le terminal informatique, la détection se faisant par champ proche ;
- Obtention, par le terminal informatique par une communication en champ proche, d'un identifiant du dispositif autonome ;
- Obtention, par le terminal informatique, d'un identifiant utilisateur et d'une clé publique, l'identifiant utilisateur et la clé publique étant associés à l'identifiant du dispositif autonome dans un serveur d'annuaire ;
- Emission, par le terminal informatique par une communication en champ proche, d'un message de mise à l'épreuve comportant une clé de session et un aléa, ces éléments étant chiffrés en utilisant la clé publique ;
- Réception, par le terminal informatique par une communication en champ proche, d'un message de résolution de l'épreuve ;
- Déchiffrement, par le terminal informatique, du message de mise à l'épreuve en utilisant comme clé de déchiffrement la clé de session, si le résultat de déchiffrement permet d'obtenir l'aléa, alors :
- Ouverture, sur le terminal informatique, d'une session pour l'identifiant d'utilisateur obtenu.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles c'est-à-dire :
- l'accès à la clé privée, pour la lecture du message de mise à l'épreuve, comporte une étape de déverrouillage impliquant une action d'authentification d'un utilisateur ;
- une action d'authentification est une action parmi au moins : saisie d'un code PIN, saisie d'une empreinte digitale, saisie d'une empreinte rétinienne, reconnaissance faciale ;
- la clé publique est enregistrée au cours d'un processus d'enrôlement du dispositif autonome, le processus d'enrôlement comportant les étapes suivantes :
   ∘ Ouverture, sur le terminal informatique, d'une session utilisateur,
   ∘ Détection du dispositif autonome par le terminal informatique, la détection se faisant par champ proche ;
   ∘ Emission, par le terminal informatique par une communication en champ proche, d'un message de demande de clé publique ;
   ∘ Obtention, par le terminal informatique par une communication en champ proche, d'un identifiant du dispositif autonome ;
   ∘ Réception, par le terminal informatique par une communication en champ proche, d'un message comportant une clé publique ;
   ∘ Emission, par le terminal informatique vers le serveur d'annuaire, d'un message de mise à jour d'utilisateur, celui de la session utilisateur, le message comportant l'identifiant du dispositif autonome et la clé publique.
- l'obtention, par le terminal informatique par une communication en champ proche, d'un identifiant du dispositif autonome se fait par proposition du terminal informatique ;
- l'obtention, par le terminal informatique par une communication en champ proche, d'un identifiant du dispositif autonome se fait par proposition du dispositif autonome.

### BREVE DESCRIPTION DES DESSINS

D'autres caractéristiques et avantages de l'invention ressortiront à la lecture de la description qui suit, en référence aux figures annexées, qui illustrent :
- [Fig. 1] : une illustration de moyens techniques permettant la mise en œuvre de l'invention ;
- [Fig. 2] : une illustration d'un enrichissement d'une base de données utilisateurs d'un serveur d'annuaire ;
- [Fig. 3] : une illustration d'étapes du procédé selon l'invention pour l'authentification d'un utilisateur ;
- [Fig. 4] : une illustration d'étapes du procédé selon l'invention pour l'enrôlement d'un dispositif autonome.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

### DESCRIPTION DETAILLEE

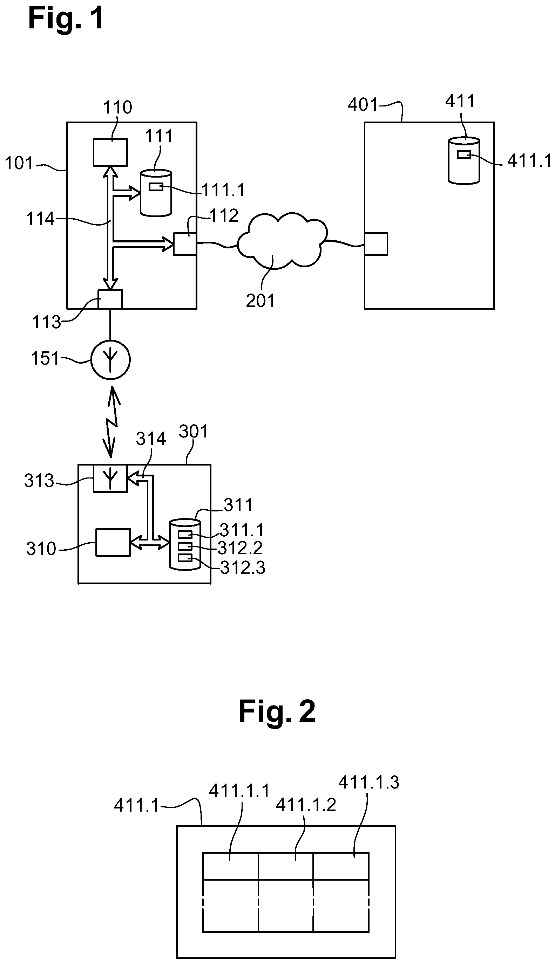

[Fig. 1] montre une infrastructure technique dans laquelle l'invention peut être mise en œuvre. La figure 1 montre un terminal 101 informatique auquel un utilisateur doit se connecter pour accéder à des ressources du terminal informatique ou via le terminal informatique et le réseau auquel le terminal 101 informatique est connecté.

Des ressources du terminal informatiques sont, par exemple :
- Des ressources de stockages locales, disque dur ou autre,
- Des capacités de traitements,
- Des logiciels aussi appelés applications,
- Une connexion réseau permettant d'accéder à des ressources à travers un réseau 201 local auquel le terminal informatique est connecté ;
- ... ; la liste n'est pas exhaustive.

Les termes "disque dur" désignent un moyen de stockage de masse. Il peut donc s'agir d'un disque dur local, réseau, d'une grappe de disques, ... La liste n'est pas exhaustive.

La figure 1 montre que le terminal 101 informatique comporte au moins :
- Un microprocesseur 110,
- Des moyens 111 de stockages, par exemple un disque dur,
- Une interface 112 réseau, par exemple une carte Ethernet,
- Une interface 113 NFC pour Near Field Communication c'est-à-dire communication en champ proche.

Le microprocesseur du terminal informatique, les moyens de stockage du terminal informatique, l'interface réseau du terminal informatique et l'interface NFC du terminal informatique sont interconnectés par un bus 114.

Lorsque l'on prête une action à un dispositif, celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Ainsi toutes les étapes décrites sont mises en oeuvre par un microprocesseur.

Tel que décrit, le terminal 101 informatique est capable d'effectuer des traitements de données, de recevoir et d'émettre des messages via son interface réseau. C'est l'interface réseau 112 du terminal 101 informatique qui permet sa connexion au réseau 201 local. Le terminal 101 informatique est également capable d'émettre est de recevoir des messages via son interface 113 NFC.

Dans la pratique l'interface 113 NFC est une interface USB (Universal Serial Bus pour connecteur série universel), ou équivalent, à laquelle est connecté un dispositif 151 lecteur NFC. On dit également lecteur NFC. Il existe aussi des terminaux informatiques, en particulier les terminaux informatiques portables, qui embarquent un dispositif lecteur NFC. C'est-à-dire des terminaux informatiques qui sont capables de communiquer en champs proches sans avoir besoin d'être connectés à un dispositif lecteur NFC. Un lecteur NFC permet de recevoir et d'émettre des messages en utilisant les communications en champs proches.

[Fig. 1] montre que les moyens 111 de stockage du terminal 101 informatique comportent au moins :
- Une zone 111.1 comportant des codes instructions correspondant à la mise en œuvre du procédé selon l'invention.

[Fig. 1] montre aussi un dispositif 301 autonome. Dans cet exemple, le dispositif 301 autonome est de type Smartphone. Un Smartphone est aussi appelé téléphone intelligent. Cela englobe également les tablettes.

[Fig. 1] montre que le dispositif 301 autonome comporte au moins :
- Un microprocesseur 310 ;
- Des moyens de stockage 311, par exemple une mémoire flash ;
- Une interface 313 NFC.

Le microprocesseur du dispositif 301 autonome, les moyens de stockage du dispositif autonome et l'interface NFC du dispositif autonome sont interconnectés par un bus 314.

La figure 1 montre que les moyens de stockage du dispositif autonome comportent :
- Une zone 311.1 comportant des codes instructions correspondant à la mise en œuvre de l'invention ;
- Une zone 311.2 configurée pour enregistrer une clé privée ;
- Une zone 311.3 configurée pour enregistrer un identifiant de dispositif autonome.

[Fig. 1] montre également :
- Un serveur 401 d'annuaire, aussi appelé serveur d'authentification.

Le serveur 401 d'annuaire est un dispositif de traitement configuré pour réaliser des actions. On ne décrira de sa composition que les moyens utiles à la compréhension de l'invention. Le serveur 401 d'annuaire est connecté au réseau 201 local. Le terminal 101 informatique est le serveur d'annuaire sont donc configurés pour pouvoir communiquer l'un avec l'autre.

[Fig. 1] montre que le serveur 401 d'annuaire comporte des moyens 411 de stockage. Les moyens de stockage du serveur 401 d'annuaire comportent une zone 411.1 base de données utilisateurs. Une telle base de données est, par exemple, un annuaire LDAP (protocole léger d'accès à un annuaire).

[Fig. 2] Montre que cette base de données est enrichie pour permettre d'associer à un utilisateur 411.1.1 référencé dans la base au moins les informations suivantes :
- Un identifiant 411.1.2 de dispositif
- Une clé publique 411.1.3.

Un serveur est un dispositif apte à recevoir des messages, via un protocole de communication, et à émettre un message en réponse au message reçu. Pour la simplicité de la description on représente les serveurs comme des dispositifs à part entière. Mais, dans la pratique, il est tout à fait possible qu'un même dispositif physique héberge plusieurs services et donc puisse être désigné comme serveur d'un premier service et serveur d'un deuxième service. La nature d'un message est soit explicite, le message comporte une information sur sa nature, soit implicite et se déduit du contexte. Un message comporte également des données permettant d'identifier son émetteur.

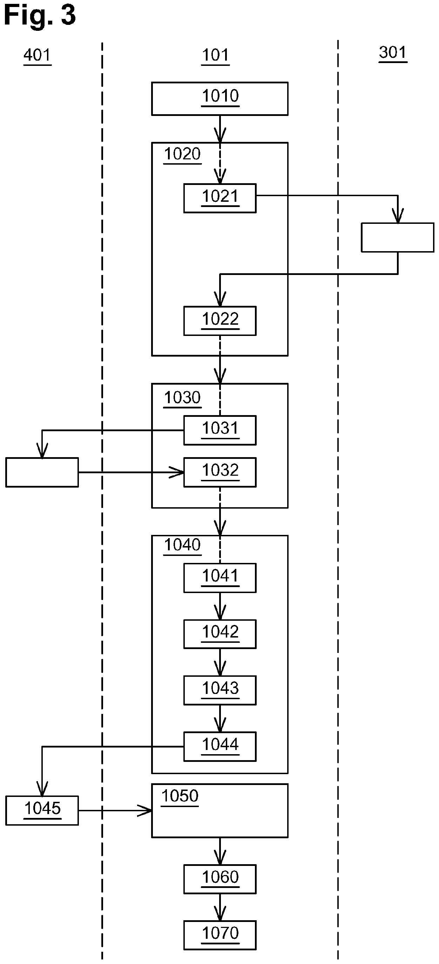

[Fig. 3] montre une étape 1010 dans laquelle un utilisateur approche le dispositif 301 autonome du lecteur 151 NFC. Le fait d'approcher le dispositif autonome du lecteur NFC permet au terminal informatique de détecter le dispositif autonome. Si le terminal 101 informatique est verrouillé, alors on passe à une étape 1020 d'obtention d'un identifiant du dispositif autonome.

Dans l'étape 1020 le terminal informatique effectue les actions suivantes :
- Emission 1021, par communication en champs proches, d'un message de lecture d'identifiant. Ce message comporte une instruction de lecture désignant la zone 311.3 identifiant de dispositif du dispositif autonome ;
- Réception 1022, par communication en champs proches, d'un message de réponse de lecteur comportant une valeur d'identifiant. Cette valeur, on dit aussi cet identifiant, correspond au contenu de la zone 311.3. Si aucun message n'est reçu, ou si le message est vide, la mise en œuvre du procédé est interrompue avec ou sans message à l'intention de l'utilisateur

Après l'étape d'obtention d'un identifiant du dispositif autonome, le terminal informatique passe à une étape 1030 d'obtention d'un identifiant d'utilisateur et d'une clé publique. Dans cette étape le terminal informatique met en œuvre les actions suivantes :
- Emission 1031 d'une requête vers le serveur 401 d'annuaire pour obtenir l'identifiant utilisateur et le clé publique associée à l'identifiant de dispositif obtenu ;
- Réception 1032 d'une réponse à la requête émise vers le serveur d'annuaire. Si aucune réponse n'est reçue, ou si la réponse est vide, la mise en œuvre du procédé est interrompue avec ou sans message à l'intention de l'utilisateur.

Après l'obtention de l'identifiant d'utilisateur et de la clé publique, le terminal informatique passe à une étape 1040 d'émission, par une communication en champs proches, d'un message de mise à l'épreuve. Dans cette étape le terminal informatique effectue les actions suivantes :
- Production (1041) d'un identifiant de session, par exemple une chaîne de caractère issue d'un générateur pseudo-aléatoire. Il enregistre cet identifiant de session pour le traitement d'une réponse ;
- Production (1042) d'un secret, par exemple une chaîne de caractère issue d'un générateur pseudo-aléatoire. Ce secret est aussi appelé un alea. Il enregistre ce secret pour le traitement d'une réponse ;
- Production (1043) du message de mise à l'épreuve comportant l'identifiant de session et le secret, le tout chiffré en utilisant la clé publique.
- Emission (1044) du message de mise à l'épreuve.

Dans une étape 1050 le terminal informatique reçoit un message de résolution d'épreuve par une communication en champs proches. Le terminal informatique passe alors à une étape 1060 de déchiffrement. En cas d'absence de réponse la mise en œuvre du procédé est interrompue.

Dans l'étape 1060 de déchiffrement le terminal informatique utilise la clé de session pour déchiffrer le contenu du message de résolution d'épreuve. Si le résultat du déchiffrement est le secret, cela signifie que le dispositif autonome a pu correctement exploiter le message de mise à l'épreuve. C'est-à-dire que le dispositif autonome connaît la clé privée associée à la clé publique utilisée pour produire le message de mise à l'épreuve. L'authentification est donc positive et le terminal informatique passe à une étape 1070 d'ouverture d'une session pour l'identifiant d'utilisateur obtenu lors de l'étape 1030 d'obtention d'un identifiant d'utilisateur et d'une clé publique.

Dans une variante de l'invention, il existe une étape 1045 mise en œuvre par le dispositif autonome pour déverrouiller un accès à la clé privée 311.2. Une action utilisateur de déverrouillage est, par exemple, la saisie d'un code PIN, la saisie d'une empreinte digitale, la saisie d'un empreinte rétinienne, une reconnaissance faciale, la liste n'est pas exhaustive. Ainsi la possession du dispositif autonome seul ne permet pas d'ouvrir une session.

Pour que l'authentification selon l'invention puisse avoir lieu, il faut que le la base de données utilisateur du serveur d'annuaire soit à jour. Cette mise à jour peut se faire par saisie manuelle des données, ou dans une variante préférée, par un processus d'enrôlement du dispositif autonome au cours duquel le dispositif autonome est associé à l'utilisateur.

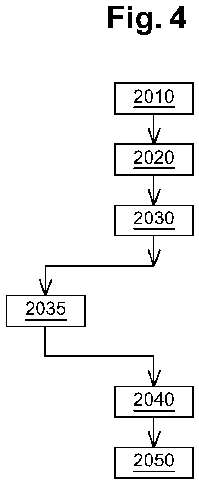

[Fig. 4] montre une étape 2010 d'ouverture d'une session sur le terminal informatique. Dans cette étape un utilisateur s'installe devant le terminal informatique et ouvre une session de manière conventionnelle ou en utilisant un dispositif autonome déjà enrôlé. Le terminal informatique obtient ainsi un identifiant d'utilisateur : celui qui a ouvert la session.

[Fig. 4] montre une étape 2020 de détection du dispositif autonome. Cette étape a lieu après que l'utilisateur ait ouvert une session et placé le dispositif autonome à proximité du lecteur NFC.

Une fois le dispositif autonome détecté, le terminal informatique met en œuvre une étape 2030 d'émission d'un message de demande de clé publique. Dans une variante de l'invention le message de demande de clé publique comporte un identifiant unique produit par le terminal informatique. L'identifiant est proposé par el terminal informatique.

Dans une étape 2035 le dispositif autonome reçoit un message de demande de clé publique et le traite. Pour ce traitement le dispositif autonome met en œuvre les étapes suivantes :
- Production d'une paire de clés publique/privé, la clé privée étant enregistrée dans la zone clé privé des moyens de stockage du dispositif autonome
- Si le message de demande de clé publique comporte un identifiant unique alors enregistrement de cet identifiant dans la zone 311.3 identifiant du dispositif autonome des moyens de stockage du dispositif autonome.
- Emission d'un message de clé publique comportant la clé publique produite. Si le message de demande ne comportait pas d'identifiant unique alors le message de clé publique comporte également la valeur lue dans la zone 311.3 identifiant du dispositif autonome. L'identifiant est proposé par le dispositif autonome. L'émission se fait par communication en champs proche.

Dans une étape 2040 le terminal informatique reçoit, par communication en champs proches, un message de clé publique comportant une clé publique et, selon les variantes, un identifiant unique du dispositif autonome. Le terminal informatique passe alors à une étape 2050 de mise à jour de la base de données utilisateurs.

Dans l'étape 2050 de mise à jour de la base de données utilisateurs, le terminal informatique émet, vers le serveur d'annuaire, une requête de mise à jour pour associer à l'identifiant utilisateur l'identifiant de dispositif et la clé publique.

Il est ainsi possible pour l'utilisateur d'utilisé le dispositif autonome pour ouvrir une session sur tous les terminaux informatiques capables de communiquer avec la base de données utilisateurs.

## Revendications

1. Procédé d'ouverture d'une session sécurisée sur un terminal informatique, le terminal informatique étant configuré pour les communications en champ proche, via un dispositif autonome configuré pour les communications en champs proche, **caractérisé en ce que** l'ouverture de session est réalisée par la mise en œuvre d'au moins les étapes suivantes :
- Détection (1010) du dispositif autonome par le terminal informatique, la détection se faisant par champ proche ;
- Obtention (1020), par le terminal informatique par une communication en champ proche, d'un identifiant du dispositif autonome ;
- Obtention (1030), par le terminal informatique, d'un identifiant utilisateur et d'une clé publique, l'identifiant utilisateur et la clé publique étant associés à l'identifiant du dispositif autonome dans un serveur d'annuaire ;
- Emission (1040), par le terminal informatique par une communication en champ proche, d'un message de mise à l'épreuve comportant une clé de session et un aléa, ces éléments étant chiffrés en utilisant la clé publique ;
- Réception (1050), par le terminal informatique par une communication en champ proche, d'un message de résolution de l'épreuve ;
- Déchiffrement (1060), par le terminal informatique, du message de mise à l'épreuve en utilisant comme clé de déchiffrement la clé de session, si le résultat de déchiffrement permet d'obtenir l'aléa, alors :
- Ouverture (1070), sur le terminal informatique, d'une session pour l'identifiant d'utilisateur obtenu.

2. Procédé d'ouverture d'une session sécurisée sur un terminal informatique selon la revendication 1, **caractérisé en ce que**, l'accès à la clé privée, pour la lecture du message de mise à l'épreuve, comporte une étape de déverrouillage impliquant une action d'authentification d'un utilisateur.

3. Procédé d'ouverture d'une session sécurisée sur un terminal informatique selon la revendication 2, **caractérisé en ce que**, une action d'authentification est une action parmi au moins : saisie d'un code PIN, saisie d'une empreinte digitale, saisie d'une empreinte rétinienne, reconnaissance faciale.

4. Procédé d'ouverture d'une session sécurisée sur un terminal informatique selon l'une des revendications précédente, **caractérisé en ce que**, la clé publique est enregistrée au cours d'un processus d'enrôlement du dispositif autonome, le processus d'enrôlement comportant les étapes suivantes :
- Ouverture (2010), sur le terminal informatique, d'une session utilisateur,
- Détection (2020) du dispositif autonome par le terminal informatique, la détection se faisant par champ proche ;
- Emission (2030), par le terminal informatique par une communication en champ proche, d'un message de demande de clé publique ;
- Obtention (2030), par le terminal informatique par une communication en champ proche, d'un identifiant du dispositif autonome ;
- Réception (2040), par le terminal informatique par une communication en champ proche, d'un message comportant une clé publique ;
- Emission (2050), par le terminal informatique vers le serveur d'annuaire, d'un message de mise à jour d'utilisateur, celui de la session utilisateur, le message comportant l'identifiant du dispositif autonome et la clé publique.

5. Procédé d'ouverture d'une session sécurisée sur un terminal informatique selon la revendication précédente, **caractérisé en ce que**, l'obtention, par le terminal informatique par une communication en champ proche, d'un identifiant du dispositif autonome se fait par proposition du terminal informatique.

6. Procédé d'ouverture d'une session sécurisée sur un terminal informatique selon la revendication 4 précédente, **caractérisé en ce que**, l'obtention, par le terminal informatique par une communication en champ proche, d'un identifiant du dispositif autonome se fait par proposition du dispositif autonome.

## Patentansprüche

1. Eröffnungsverfahren einer gesicherten Session auf einem IT-Gerät, wobei das IT-Gerät für Nahfeldkommunikation konfiguriert ist, über eine eigenständiges Vorrichtung, die für Nahfeldkommunikation konfiguriert ist, **dadurch gekennzeichnet, dass** das Eröffnen der Session durch Umsetzen mindestens folgender Schritte erfolgt:
- Erkennen (1010) der eigenständigen Vorrichtung durch das IT-Gerät, wobei das Erkennen mittels Nahfeld erfolgt;
- Abrufen (1020), durch das IT-Gerät mittels Nahfeldkommunikation, einer Kennung der eigenständigen Vorrichtung;
- Abrufen (1030), durch das IT-Gerät, einer Benutzerkennung und eines öffentlichen Schlüssels, wobei die Benutzerkennung und der öffentliche Schlüssel mit der Kennung der eigenständigen Vorrichtung in einem Verzeichnisserver verknüpft sind;
- Senden (1040), durch das IT-Gerät mittels Nahfeldkommunikation, einer Überprüfungsnachricht, die einen Sessionschlüssel und einen Zufallswert enthält, wobei diese Elemente unter Verwendung des öffentlichen Schlüssels verschlüsselt werden;
- Empfangen (1050), durch das IT-Gerät mittels Nahfeldkommunikation, einer Nachricht zur Auflösung der Überprüfung;
- Entschlüsseln (1060), durch das IT-Gerät, der Überprüfungsnachricht unter Verwendung des Sessionschlüssels als Entschlüsselungsschlüssel, wenn das Entschlüsselungsergebnis das Abrufen des Zufallswerts erlaubt, dann:
- Eröffnen (1070), auf dem IT-Gerät, einer Session für die abgerufene Benutzerkennung.

2. Eröffnungsverfahren einer gesicherten Session auf einem IT-Gerät nach Anspruch 1, **dadurch gekennzeichnet, dass** der Zugriff auf den privaten Schlüssel zum Lesen der Überprüfungsnachricht einen Entsperrschritt umfasst, der eine Authentifizierungsaktion eines Benutzers beinhaltet.

3. Eröffnungsverfahren einer gesicherten Session auf einem IT-Gerät nach Anspruch 2, **dadurch gekennzeichnet, dass** eine Authentifizierungsaktion mindestens eine folgender Aktionen ist: Eingabe eines PIN-Codes, Eingabe eines Fingerabdrucks, Eingabe eines Netzhautabdrucks, Gesichtserkennung.

4. Eröffnungsverfahren einer gesicherten Session auf einem IT-Gerät nach einem der vorstehenden Ansprüche, **dadurch gekennzeichnet, dass** der öffentliche Schlüssel während eines Registrierungsprozesses der eigenständigen Vorrichtung registriert wird, wobei der Registrierungsprozess folgende Schritte umfasst:
- Eröffnen (2010), auf dem IT-Gerät, einer Benutzersitzung,
- Erkennen (2020) der eigenständigen Vorrichtung durch das IT-Gerät, wobei das Erkennen mittels Nahfeld erfolgt;
- Senden (2030), durch das IT-Gerät mittels Nahfeldkommunikation, einer Nachricht zur Anforderung eines öffentlichen Schlüssels;
- Abrufen (2030), durch das IT-Gerät mittels Nahfeldkommunikation, einer Kennung der eigenständigen Vorrichtung;
- Empfangen (2040), durch das IT-Gerät mittels Nahfeldkommunikation, einer Nachricht, die einen öffentlichen Schlüssel enthält;
- Senden (2050), durch das IT-Gerät an den Verzeichnisserver, einer Nachricht zur Benutzeraktualisierung, wobei die Nachricht die Kennung der eigenständigen Vorrichtung und den öffentlichen Schlüssel enthält.

5. Eröffnungsverfahren einer gesicherten Session auf einem IT-Gerät nach vorstehendem Anspruch, **dadurch gekennzeichnet, dass** das Abrufen, durch das IT-Gerät mittels Nahfeldkommunikation, einer Kennung der eigenständigen Vorrichtung durch Vorschlag vom IT-Gerät erfolgt.

6. Eröffnungsverfahren einer gesicherten Session auf einem IT-Gerät nach vorstehendem Anspruch 4, **dadurch gekennzeichnet, dass** das Erhalten, durch das IT-Gerät mittels Nahfeldkommunikation, einer Kennung der autonomen Vorrichtung durch Vorschlag von der autonomen Vorrichtung erfolgt.

## Claims

1. A method of opening a secure session on a computer terminal, the computer terminal being configured for near-field communication, via an autonomous device configured for near-field communication, **characterized in that** the opening of a session is carried out by the implementation of at least the following steps:
- Detecting (1010) the autonomous device by the computer terminal, the detection done by near-field;
- Obtaining (1020), by the computer terminal by near-field communication, an identifier of the autonomous device;
- Obtaining (1030), by the computer terminal, a user identifier and a public key, the user identifier and the public key being associated with the identifier of the autonomous device in a directory server;
- Transmitting (1040) by the computer terminal by near-field communication, a test message comprising a session key and a random variable, these elements being encrypted using the public key;
- Receiving (1050), by the computer terminal by near-field communication, a test resolution message;
- Decrypting (1060), by the computer terminal, the test message using the session key as decryption key; if the result of the decryption enables the random variable to be obtained, then:
- Opening (1070), on the computer terminal, a session for the obtained user identifier.

2. The method of opening a secure session on a computer terminal according to Claim 1, **characterized in that** the access to the private key for reading the test message comprises an unlocking step involving an action of authenticating a user.

3. The method of opening a secure session on a computer terminal according to Claim 2, **characterized in that** an authentication action is an action of at least: entering a PIN code, entering a fingerprint, entering a retinal scan, facial recognition.

4. The method of opening a secure session on a computer terminal according to one of the preceding Claims, **characterized in that** the public key is recorded during a process of enrolling the autonomous device, the enrollment process comprising the following steps:
- Opening (2010) a user session on the computer terminal,
- Detecting (2020) the autonomous device by the computer terminal, the detection being by near-field;
- Transmitting (2030), by the computer terminal by near-field communication, a public key request message;
- Obtaining (2030), by the computer terminal by near-field communication, an identifier of the autonomous device;
- Receiving (2040), by the computer terminal by near-field communication, a message comprising a public key;
- Transmitting (2050), by the computer terminal to the directory server, a user update message, i.e. the user session message, the message comprising the identifier of the autonomous device and the public key.

5. The method of opening a secure session on a computer terminal according to the preceding Claim, **characterized in that** obtaining, by the computer terminal by near-field communication, an identifier of the autonomous device is done by proposal from the computer terminal.

6. The method of opening a secure session on a computer terminal according to the preceding Claim 4, **characterized in that** obtaining, by the computer terminal by near-field communication, an identifier of the autonomous device is done by proposal from the computer terminal.
